# EUROPEAN PATENT APPLICATION

(11) **EP 3 023 959 A2**
(43) Date of publication of application: **25.05.2016**
(21) Application number: 15195021.9
(22) Date of filing: 17.11.2015
(51) Int. Cl.: G08B 29/04, G08B 29/18, G08B 13/196

(54) **MONITORING SYSTEM**

(30) Priority: 20.11.2014 JP 2014235963
(71) Applicant: Panasonic Intellectual Property Management Co., Ltd., Osaka-shi, Osaka 540-6207 (JP)
(72) Inventor: KANAMARU, Hiroshi, Osaka, 540-6207 (JP); WAKEYAMA, Daisuke, Osaka, 540-6207 (JP); MATSUO, Hideyuki, Osaka, 540-6207 (JP); YAMANISHI, Koji, Osaka, 540-6207 (JP); TSUJI, Hiroshi, Osaka, 540-6207 (JP)
(74) Representative: Eisenführ Speiser

(57) **Abstract**

A monitoring system includes a sensor, a monitoring camera, a power control apparatus, a master device that is connected to a fixed telephone network so as to perform calls to other fixed telephones, and a mobile phone terminal that is connected to other mobile phones via a mobile phone network. When an abnormality is detected, the sensor, the monitoring camera, or the power control apparatus transmits an abnormality detection signal to the master device. When the abnormality detection signal is received, the master device converts at least a part of the abnormality detection signal so as to generate notification information, and transmits the notification information to the mobile phone terminal. The mobile phone terminal displays a warning screen based on the notification information on the display unit.

## Description

### [TECHNICAL FIELD]

The present invention relates to a monitoring system.

### [BACKGROUND ART]

In the related art, there is a monitoring system using a camera, a sensor, and the like (for example, (refer to Japanese Patent Unexamined Publication No. 2007-323533). The monitoring system includes a monitoring device and a monitoring server.

The monitoring device includes image capturing means, sound input and output means, and target recognition means such as a human sensor. The image capturing means captures an image of a monitoring target in a monitoring space. The sound input and output means outputs sound to the monitoring target and receives sound from the monitoring target. The target recognition means outputs a target recognition signal when the monitoring target is recognized.

The monitoring server includes reception means, acquisition means, and communication means. The reception means receives the target recognition signal from the monitoring device. The acquisition means acquires video information captured by the image capturing means and audio information obtained through the sound input by the sound input and output means on the basis of the reception of the target recognition signal by the reception means. The communication means transmits a connection request to an information terminal of a registered user in a case where the target recognition signal is received by the reception means. The communication means transmits the video information and the audio information acquired by the acquisition means to the information terminal by using bidirectional communication between the monitoring device and the information terminal, established when the information terminal responds to the connection request, and receives video information and audio information from the information terminal and transmits the information to the monitoring device.

### [SUMMARY OF THE INVENTION]

In Japanese Patent Unexamined Publication No. 2007-323533, a dedicated system is necessary as a monitoring system, and much labor and cost are required to introduce a monitoring system. For example, in a case where a camera of the monitoring system has a battery of which the residual quantity is insufficient, or an ambient temperature of the camera is excessively high or low, the monitoring system unstably operates.

The present invention has been made in consideration of the circumstances, and provides a monitoring system, convenient to use, which can improve stability of a system operation at low cost by using an existing fixed telephone.

According to the present invention, there is provided a monitoring system including a sensor; a monitoring camera that includes a microphone, a speaker, and an image capturing unit; a power control apparatus that supplies power to each device so as to perform communication of information regarding current, voltage, and power; a master device that performs calls to the monitoring camera, the sensor, and the power control apparatus, and is connected to a fixed telephone network so as to perform calls to other fixed telephones; and a mobile phone terminal that includes a display unit, performs wireless communication with the master device by using a wireless router, and is connected to other mobile phones via a mobile phone network, in which, when an abnormality is detected, the sensor, the monitoring camera, or the power control apparatus transmits an abnormality detection signal indicating that the abnormality is detected to the master device, in which, when the abnormality detection signal is received, the master device converts at least a part of the abnormality detection signal so as to generate notification information, and transmits the notification information to the mobile phone terminal, and in which the mobile phone terminal displays a warning screen based on the notification information on the display unit.

According to the present invention, it is possible to provide a monitoring system, convenient to use, which can improve stability of a system operation at low cost by using an existing fixed telephone.

### [BRIEF DESCRIPTION OF DRAWINGS]

[FIG. 1]

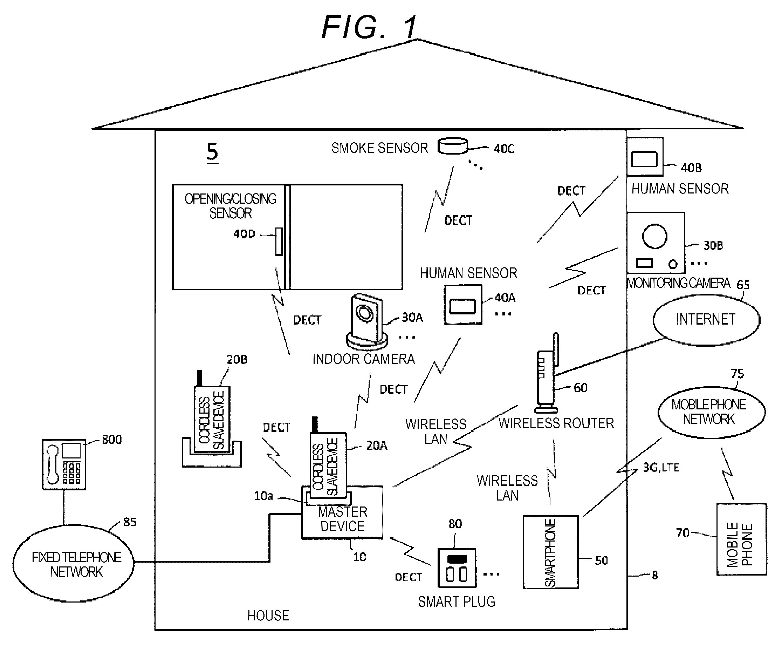

   FIG. 1 is a diagram illustrating a system configuration of a monitoring camera system of an embodiment;
[FIG. 2]

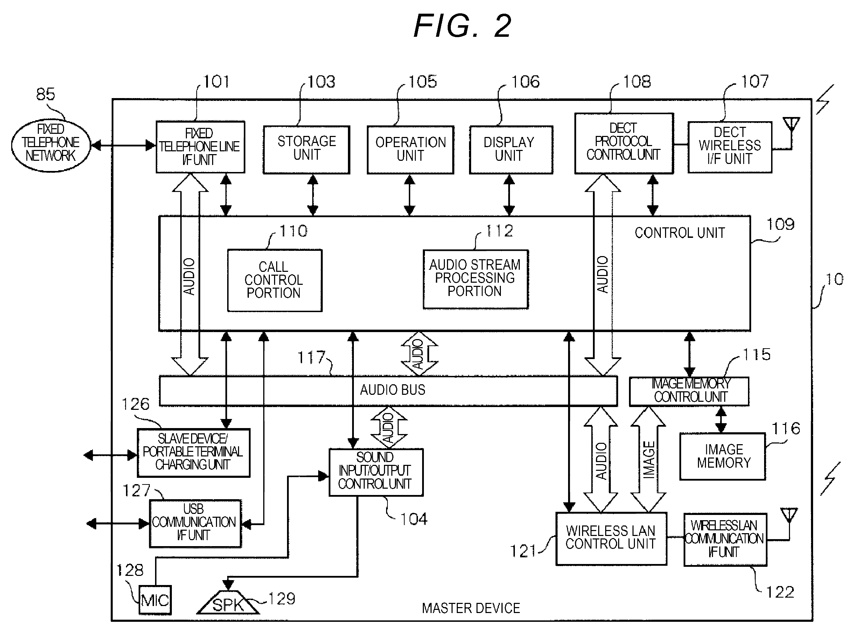

   FIG. 2 is a block diagram illustrating an internal configuration of a master device of the embodiment;
[FIG. 3]

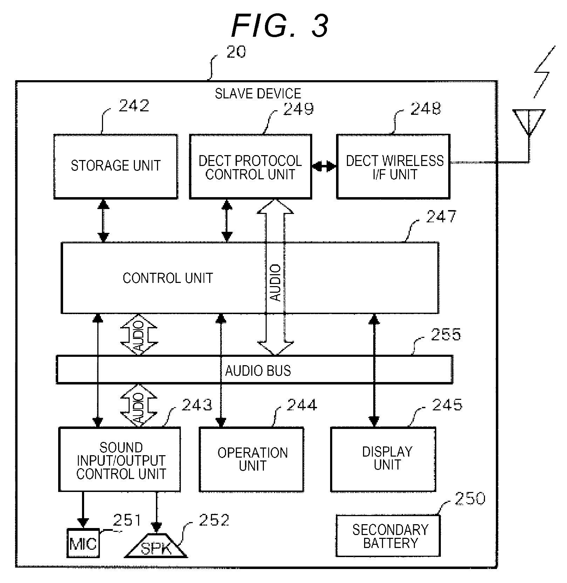

   FIG. 3 is a block diagram illustrating an internal configuration of a cordless slave device of the embodiment;
[FIG. 4]

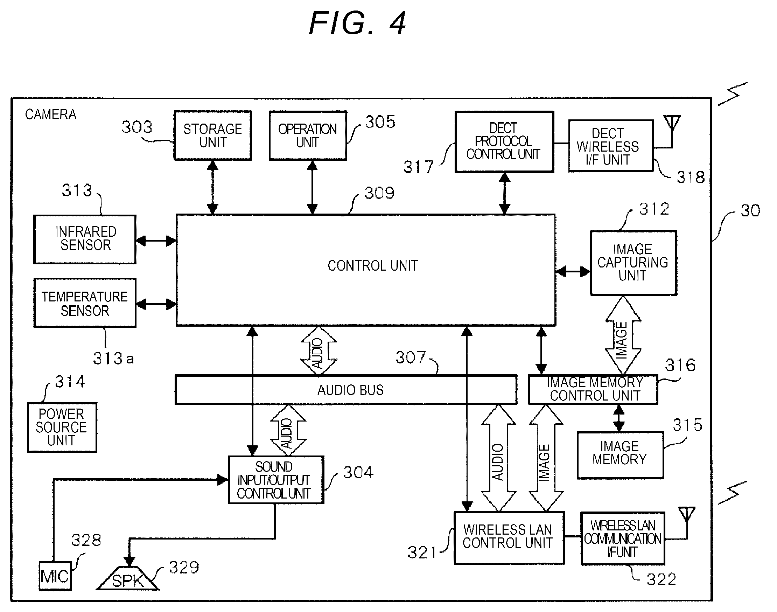

   FIG. 4 is a block diagram illustrating an internal configuration of a camera of the embodiment;
[FIG. 5]

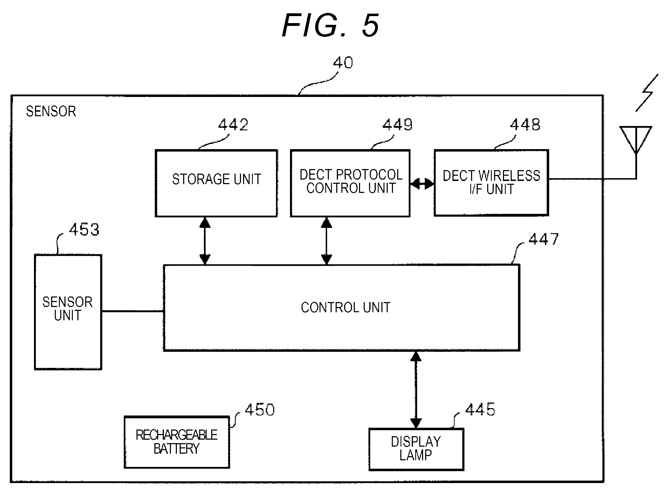

   FIG. 5 is a block diagram illustrating an internal configuration of a sensor of the embodiment;
[FIG. 6]

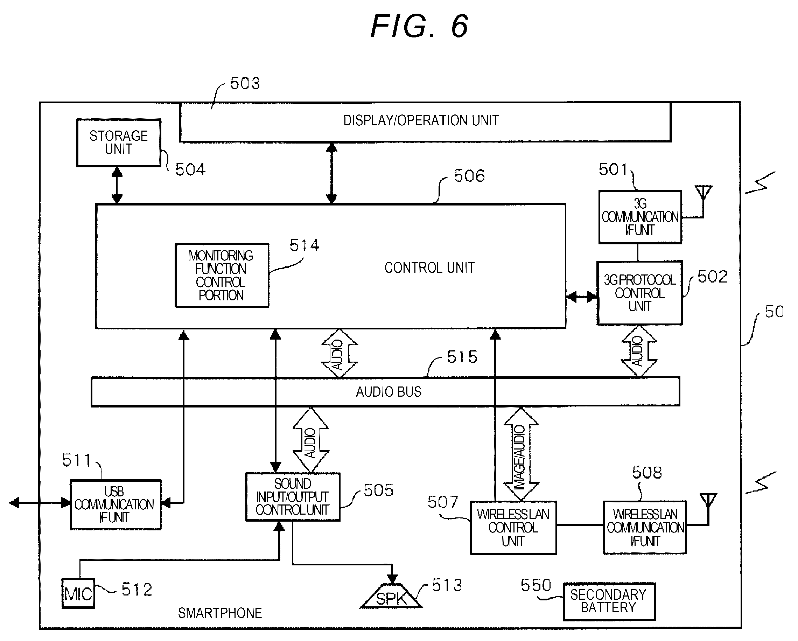

   FIG. 6 is a block diagram illustrating an internal configuration of a smartphone of the embodiment;
[FIG. 7]

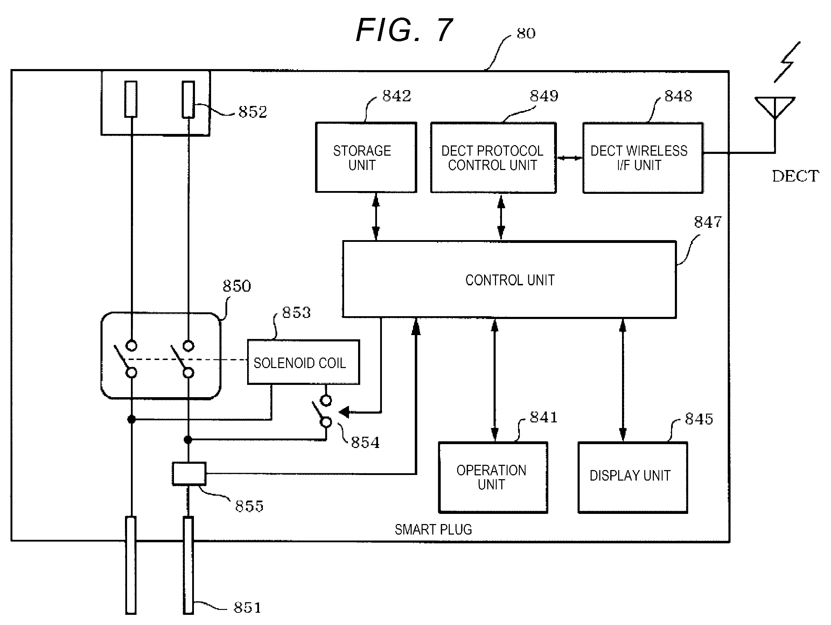

   FIG. 7 is a block diagram illustrating an internal configuration of a smart plug of the embodiment;
[FIG. 8]

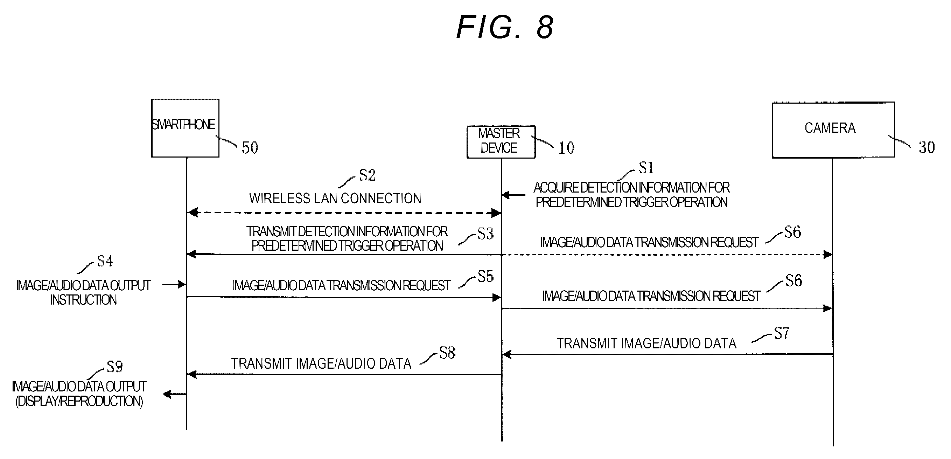

   FIG. 8 is a sequence diagram illustrating an operation example of the monitoring camera system in a case where the smartphone acquires image data or audio data from the camera and then outputs the data in the embodiment;
[FIG. 9]

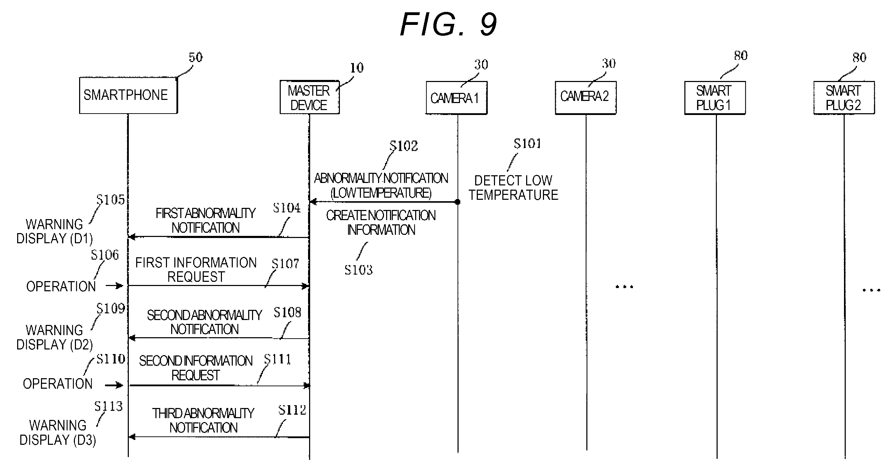

   FIG. 9 is a sequence diagram illustrating an operation example of the monitoring camera system in a case where an abnormality has occurred in the camera of the embodiment;
[FIG. 10]

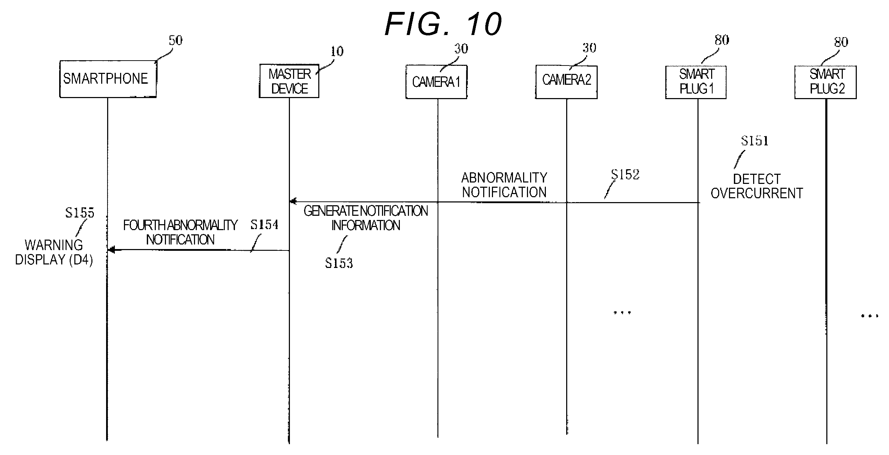

   FIG. 10 is a sequence diagram illustrating an operation example of the monitoring camera system in a case where an abnormality has occurred in the smart plug of the embodiment;
[FIG. 11]

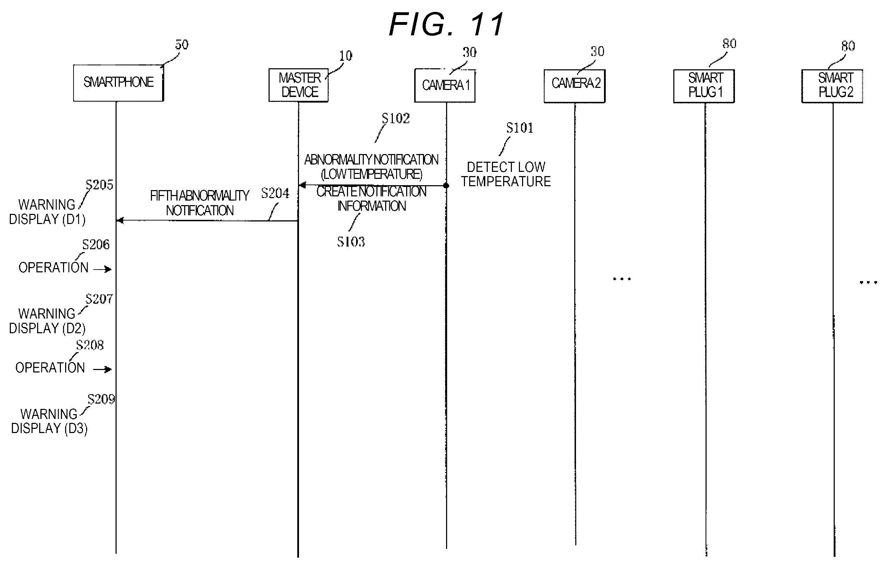

   FIG. 11 is a sequence diagram illustrating another operation example of the monitoring camera system in a case where an abnormality has occurred in the camera of the embodiment;
[FIG. 12A]

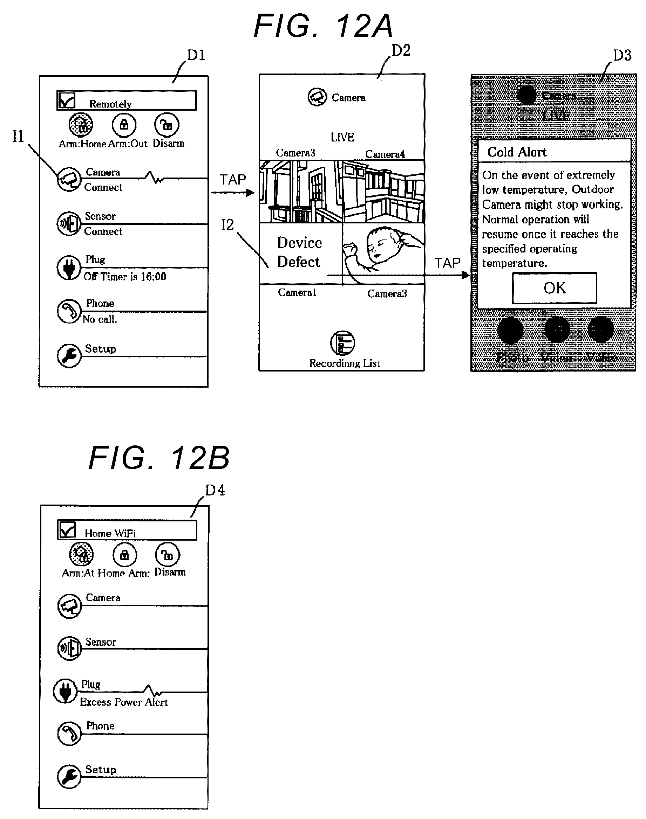

   FIG. 12A is a schematic diagram illustrating an example of a warning screen in a case where an abnormality has occurred in the camera of the embodiment; and
[FIG. 12B]
   FIG. 12B is a schematic diagram illustrating an example of a warning screen in a case where an abnormality has occurred in the smart plug of the embodiment.

### [DESCRIPTION OF EMBODIMENT]

Hereinafter, an embodiment of the present invention will be described with reference to the drawings.

FIG. 1 is a diagram illustrating an example of a system configuration of monitoring camera system 5 of the present embodiment. Monitoring camera system 5 is mainly provided in house 8, and includes master device 10, two cordless slave devices 20A and 20B (hereinafter, simply referred to as "slave devices"), a plurality of cameras (specifically, indoor camera 30A, monitoring camera 30B,...), various sensors (specifically, human sensors 40A and 40B, smoke sensor 40C, opening/closing sensor 40D,...), smartphone 50, wireless router 60, and a plurality of smart plugs (a smart plug 80,...). Although not illustrated in FIG. 1, each smart plug 80 is electrically connected to an electric apparatus (for example, an air conditioner or lighting equipment) which is disposed in the house. A configuration of monitoring camera system 5 is only an example and may be modified in various aspects.

Master device 10 which functions as a gateway in monitoring camera system 5 is a control device which controls the entire operation of monitoring camera system 5, and is connected to the slave devices, the cameras, the sensors, the smart plugs, and the like in a communicable manner by using a communication method such as digital enhanced cordless telecommunications (DECT). Master device 10 is connected to the Internet 65 via wireless router 60 using a wireless LAN. Master device 10 is connected to a fixed telephone network 85 in a wired manner and can perform a call to fixed telephone 800. Master device 10 has a function of charging slave device 20A which is inserted into insertion port 10a.

Slave devices 20A and 20B are connected to master device 10 in the DECT communication method and can perform a call to master device 10. Particularly, in a case where two slave devices 20A and 20B are not required to be differentiated from each other, the slave devices are collectively referred to as slave device 20.

Various sensors 40 (specifically, human sensors 40A and 40B, smoke sensor 40C, opening/closing sensor 40D,...) are connected to master device 10 in the DECT communication method. Herein, as sensors, opening/closing sensor 40D which detects opening and closing of a window, smoke sensor 40C which detects smoke, and human sensors 40A and 40B which detect a person with infrared rays are used. Particularly, in a case where the sensors are not required to be differentiated from each other, the sensors are collectively referred to as sensor 40. As will be described later, infrared sensor 313 (refer to FIG. 4) built into camera 30 is also used as a human sensor.

A plurality of cameras (specifically, indoor camera 30A, monitoring camera 30B,...) have a call function and are connected to master device 10 in the DECT communication method. Herein, as cameras, monitoring camera 30B which captures an image of an outdoor environment, and indoor camera 30A which captures an image of house 8, are used. Particularly, in a case where the cameras are not required to be differentiated from each other, the cameras are collectively referred to as camera 30.

Smartphone 50 is connected to master device 10 via wireless router 60 using a wireless LAN, and is connected to mobile phone 70 or other smartphones via mobile phone network 75 using a communication method such as the third generation (3G) method, a high speed package access (HSPA) method, or a long term evolution (LTE) method.

Smart plugs 80 have a wireless communication function using DECT, and are connected to master device 10 by using a wireless communication method such as DECT. Smart plugs 80 are electrically connected to electric apparatuses (for example, an air conditioner, lighting equipment, camera 30, and sensor 40) disposed in house 8, and supply power to the electric apparatus which is connected to each smart plug 80 during an operation mode and do not supply power to the electric apparatus which is connected to each smart plug 80 during an operation stop mode.

FIG. 2 is a block diagram illustrating an internal configuration of master device 10. Master device 10 includes control unit 109, storage unit 103, operation unit 105, and display unit 106. Master device 10 receives various input operations and displays information such as an image on display unit 106. Control unit 109 has a call control portion 110 and an audio stream processing portion 112 built thereinto, and performs call control during calling, processing of audio data, and the like.

Master device 10 includes image memory control unit 115 and image memory 116, and stores image data or the like captured by camera 30 in image memory 116.

Master device 10 includes wireless LAN control unit 121 and wireless LAN communication I/F unit 122, and transmits and receives image data and audio data to and from smartphone 50, camera 30, and the like via wireless router 60 connected over a wireless LAN.

Master device 10 includes DECT protocol control unit 108 and DECT wireless I/F unit 107, and performs wireless connection to slave device 20, sensor 40, and camera 30 by using a wireless method such as digital enhanced cordless telecommunications (DECT).

Master device 10 includes audio bus 117, sound input/output control unit 104, speaker 129, and microphone 128, and performs input and output of sound to and from an external device.

Master device 10 includes fixed telephone line I/F unit 101, and can perform a call to external fixed telephone 800 connected to fixed telephone network 85.

Master device 10 includes slave device/portable terminal charging unit 126 and charges slave device 20 or smartphone 50 inserted into insertion port 10a.

Master device 10 includes USB communication I/F unit 127, and transmits and receives data to and from an apparatus, a memory, or the like having an interface of a universal serial bus (USB) standard.

Master device 10 registers pairs of various sensors 40 and the plurality of cameras 30 in storage unit 103 in correlation with each other. For example, human sensor 40B and monitoring camera 30B are installed at close locations outdoors and are thus registered in correlation with each other. Monitoring camera 30B, as will be described later, integrally has infrared sensor 313 (refer to FIG. 4) which is a human sensor and is built thereinto, and is thus also registered in correlation with infrared sensor 313. Human sensor 40A, smoke sensor 40C, and opening/closing sensor 40D are all installed inside house 8 and are thus registered in correlation with indoor camera 30A.

FIG. 3 is a block diagram illustrating an internal configuration of (cordless) slave device 20. Slave device 20 includes control unit 247, storage unit 242, operation unit 244, and display unit 245. Slave device 20 receives various input operations and displays information such as an image on display unit 245.

Slave device 20 includes DECT protocol control unit 249 and DECT wireless I/F unit 248, and performs wireless connection to master device 10, sensor 40, and camera 30 by using a wireless method such as DECT.

Slave device 20 includes audio bus 255, sound input/output control unit 243, speaker 252, and microphone 251, and performs input and output of sound to and from an external device.

Slave device 20 includes secondary battery 250. Secondary battery 250 is rechargeable battery, and supplies power to each unit.

FIG. 4 is a block diagram illustrating an internal configuration of camera 30. Indoor camera 30A and monitoring camera 30B as examples of cameras 30 have substantially the same configuration as each other. Camera 30 includes control unit 309, storage unit 303, and operation unit 305. Camera 30 performs an operation related to image capturing and also receives input operations.

Camera 30 includes DECT protocol control unit 317 and DECT wireless I/F unit 318, and performs wireless connection to master device 10 by using a wireless method such as DECT.

Camera 30 includes wireless LAN control unit 321 and wireless LAN communication I/F unit 322, and transmits and receives image data and audio data to and from master device 10, smartphone 50, and the like via wireless router 60 connected over the wireless LAN.

Camera 30 includes audio bus 307, sound input/output control unit 304, speaker 329, and microphone 328, and performs input and output of sound to and from an external device.

Camera 30 includes image capturing unit 312, image memory control unit 316, and image memory 315, and stores image data captured by image capturing unit 312 in image memory 315. Image capturing unit 312 has a lens and an imaging element (for example, an image sensor such as a charged coupled device (CCD) or a complementary metal oxide semiconductor (CMOS)).

Camera 30 integrally has infrared sensor 313 which is a passive infrared (PIR) sensor as a human sensor built thereinto. Infrared sensor 313 detects the presence of a person by detecting a change in heat (infrared rays) generated by the person. Camera 30 includes a power source unit 314 which is constituted by a commercial AC power source. Camera 30 may include temperature sensor 313a which measures an ambient temperature.

FIG. 5 is a block diagram illustrating an internal configuration of sensor 40. Sensor 40 includes control unit 447, storage unit 442, display lamp 445, and sensor unit 453. Sensor 40 performs a predetermined detection operation, such as turning on display lamp 445, in a case where a target (for example, an intruder which is also the same for the following description) is detected by sensor unit 453.

Sensor 40 includes DECT protocol control unit 449 and DECT wireless I/F unit 448, and performs wireless connection to master device 10 by using a wireless method such as DECT, and sends sensor detection information to master device 10 when a target is detected.

A sensor unit 453 differs depending on the kind of sensor 40. For example, in a case of human sensors 40A and 40B, sensor unit 453 is a PIR sensor which detects a person through a change in infrared rays. In a case of opening/closing sensor 40D which detects opening and closing of a front door, a window, or the like, sensor unit 453 is a reed switch which switches between turned-on and turned-off states due to opening and closing. In a case of smoke sensor 40C, sensor unit 453 is a light emitting/receiving unit which detects smoke when emitted light is blocked by the smoke.

A secondary battery 450 is a rechargeable battery and supplies power to each unit.

FIG. 6 is a block diagram illustrating an internal configuration of smartphone 50. Smartphone 50 includes control unit 506, storage unit 504, and display/operation unit (touch panel) 503. Smartphone 50 receives various input operations and displays information such as an image on display/operation unit 503. Monitoring function control portion 514 which can set a function of camera 30 is built into control unit 506 as will be described later. Display/operation unit 503, which is a display/input unit in which a display unit and an operation unit are integrated, displays information such as an image or an icon on a screen, and receives a tap operation (or a touch operation) on a screen performed by a user.

Smartphone 50 includes 3G protocol control unit 502 and 3G wireless I/F unit 501, and performs wireless connection to mobile phone 70 or other smartphones connected to mobile phone network 75, by using a third generation (3G) wireless communication method.

Smartphone 50 includes audio bus 515, sound input/output control unit 505, speaker 513, and microphone 512, and performs input and output of sound to and from an external device.

Smartphone 50 includes wireless LAN control unit 507 and wireless LAN communication I/F unit 508, and transmits and receives image data and audio data to and from master device 10, camera 30, and the like via wireless router 60 connected over the wireless LAN.

Smartphone 50 includes a USB communication I/F unit 511, and transmits and receives data to and from an apparatus, a memory, or the like having an interface of a universal serial bus (USB) standard.

Smartphone 50 includes a secondary battery 550. Secondary battery 550 is a rechargeable battery and supplies power to each unit.

FIG. 7 is a block diagram illustrating an internal configuration of smart plug 80. Smart plug 80 is connected to the camera or other apparatuses.

Smart plug 80 includes control unit 847, storage unit 842, and display unit 845 having a display lamp. For example, On (power supply) and Off (power supply cutoff) condition settings which can be set or changed by smart plug 80 performing communication with smartphone 50 or master device 10 are registered in storage unit 842.

Smart plug 80 includes DECT protocol control unit 849 and DECT wireless I/F unit 848, and performs wireless connection to master device 10 by using a wireless method such as DECT, and switches supply and cutoff of commercial AC power to each apparatus connected to smart plug 80.

Smart plug 80 includes switch unit 850. Switch unit 850 performs connection or disconnection between plug terminals 851 and receptacle terminals 852. Switch unit 850 is driven by solenoid coil 853. Switch unit 850 is closed when a driving current flows through solenoid coil 853 from an AC power source, and thus plug terminals 851 are electrically connected to receptacle terminals 852. Switch unit 854 causes a driving current to or not to flow through solenoid coil 853 under the control of control unit 847.

A current detection element 855 is provided between plug terminals 851 and switch unit 850. When a current flows between plug terminals 851 and receptacle terminals 852, current detection element 855 detects the current and sends a detection signal to control unit 847. Plug terminals 851 may be connected to various apparatuses (electric apparatuses, electronic apparatuses, and the like).

Next, an operation of monitoring camera system 5 will be described.

FIG. 8 is a sequence diagram illustrating an operation example of monitoring camera system 5 in a case where smartphone 50 acquires image data or audio data from camera 30 and then outputs the data.

For example, it is assumed that a home security application corresponding to monitoring camera system 5 is installed in smartphone 50 in advance, and this application is activated by a user's input operation.

If detection information (information regarding detection performed by, for example, sensor unit 453 of each sensor 40 or infrared sensor 313 of camera 30) for a predetermined trigger operation is acquired (step S1), master device 10 performs a wireless communication connection to smartphone 50 by using a wireless LAN (step S2). If the wireless LAN connection to smartphone 50 has been completed, master device 10 transmits the detection information (refer to the above description) for the predetermined trigger operation to smartphone 50 (step S3).

If an image/audio data output instruction operation is received from the user (step S4), smartphone 50 transmits image/audio data transmission request information (step S5). If the image/audio data transmission request information is received from smartphone 50, master device 10 requests camera 30 to transmit image/audio data (step S6).

Master device 10 may transmit the detection information (refer to the above description) for the predetermined trigger operation to smartphone 50 and may also request camera 30 to transmit image/audio data (step S6).

If the image/audio data transmission request is received from master device 10, camera 30 performs a wireless communication connection to master device 10 by using the wireless LAN, and acquires image data captured by image capturing unit 312 and audio data collected by microphone 328 and transmits the data to master device 10 (step S7). Master device 10 transmits the image data and the audio data transmitted from camera 30 to smartphone 50 (step S8).

Smartphone 50 displays the image data transmitted from master device 10 on display/operation unit 503, and outputs the audio data transmitted from master device 10 from speaker 513 (step S9). Consequently, the user of smartphone 50 can display a monitoring screen including the image data from camera 30 and outputs the audio data from camera 30 as sound. The monitoring screen may include image data from the plurality of cameras 30.

FIG. 9 is a sequence diagram illustrating an operation example of monitoring camera system 5 in a case where an abnormality has occurred in camera 30. It is assumed in FIG. 9 that an excessively low temperature, that is, a temperature which is equal to or lower than a predetermined allowable temperature is detected as an ambient temperature of camera 30. A threshold value of the allowable temperature is predefined.

First, if temperature sensor 313a detects a temperature (low temperature) which is equal to or lower than a predetermined threshold value (step S101), camera 30 sends an abnormality notification including the fact that the low temperature is detected to master device 10 (step S102). Information regarding the abnormality notification includes, for example, the fact that an abnormality is detected in camera 30, a camera ID for identifying camera 30 in which the abnormality has occurred, and information on the type of abnormality (for example, low temperature information). Information regarding abnormality detection is, for example, an abnormality detection flag. For example, in a case where an abnormality is detected by camera 30, master device 10 acquires an abnormality detection flag which is set to be an On state by camera 30.

A temperature sensor may not be provided in camera 30, and a temperature sensor may be provided near camera 30 as sensor 40. In this case, camera 30 is correlated with sensor 40 as a temperature sensor.

If the abnormality notification is received from camera 30, master device 10 converts the camera ID (mechanical identification information) included in the abnormality notification into camera identification information which can be identified by the user of smartphone 50. Master device 10 holds in advance identification information of the camera which can be identified by the user, corresponding to a camera ID, as a conversion table (not illustrated).

For example, a camera ID "C12345" is converted into "Camera 1". For example, a camera ID "C23456" is converted into "Camera 2". For example, a camera ID "C34567" is converted into "Camera 3". For example, a camera ID "C45678" is converted into "Camera 4". The converted camera identification information is displayed on, for example, a warning screen (refer to FIG. 12A).

Master device 10 generates notification information including the camera identification information converted from the camera ID on the basis of the information regarding the abnormality notification (step S103). For example, master device 10 generates first notification information including converted camera identification information and information indicating that an abnormality of a camera is detected. For example, master device 10 generates second notification information including converted camera identification information and information indicating that an abnormality of a camera identified by the identification information is detected. For example, master device 10 generates third notification information including converted camera identification information and information indicating the type of abnormality. The first notification information and the second notification information may be the same as each other.

Master device 10 sends a first abnormality notification including the first notification information to smartphone 50 (step S104). In other words, the first abnormality notification includes information indicating that the abnormality has occurred in camera 30.

If the first abnormality notification is received from master device 10, smartphone 50 generates and displays warning screen D1 (for example, refer to FIG. 12A) on the basis of the first notification information (step S105). Warning screen D1 indicates that an abnormality has occurred in camera 30 among various apparatuses (for example, camera 30 (Camera), sensor 40 (Sensor), smart plug 80 (Plug), and the telephone (master device 10 or slave device 20) (Phone)) provided in monitoring camera system 5. Warning screen D1 and warning screen D4 (which will be described later) exemplify that an apparatus indicated by a straight line normally operates, and an abnormality has occurred in an apparatus indicated by a straight line whose part includes a waveform. The user checks screen D1 and can thus recognize that an abnormality has occurred in camera 30 among the respective apparatuses of monitoring camera system 5.

If the user checks screen D1, and selects (for example, taps), for example, a camera icon 11, smartphone 50 receives a selection operation (for example, a tap operation) of camera icon 11 (step S106).

Smartphone 50 makes a first information request based on the selection operation (step S107). The first information request includes a request for more specific information regarding the abnormality of camera 30 than that of the first notification information.

If the first information request is received from smartphone 50, master device 10 sends a second abnormality notification including the second notification information to smartphone 50 (step S108). In other words, the second abnormality notification includes information indicating that an abnormality has occurred in a specific camera 30.

If the second abnormality notification is received from master device 10, smartphone 50 generates and displays warning screen D2 (for example, refer to FIG. 12A) on the basis of the second notification information (step S109). Warning screen D2 indicates ("Device Defect") that an abnormality has occurred in a specific camera 30 (here, a camera installed in a bedroom as camera 1) among the plurality of cameras 30. The user checks screen D2 and can thus recognize that an abnormality has occurred in specific camera 1 (for example, a camera installed in the bedroom) among the plurality of cameras 30. Since a specific camera is displayed as camera 1, the user can more easily understand an installation environment such as a location than in a case where a camera ID is directly displayed.

If the user checks screen D2, and selects (for example, taps) display area I2 of camera 1 on screen D2, smartphone 50 receives a selection operation (for example, a tap operation) of camera 1 (step S110).

Smartphone 50 makes a second information request based on the selection operation (step S111). The second information request includes a request for more specific information regarding the abnormality of camera 30 than that of the second notification information.

If the second information request is received from smartphone 50, master device 10 sends a third abnormality notification including the third notification information to smartphone 50 (step S112). In other words, the third abnormality notification includes information indicating the type of abnormality.

If the third abnormality notification is received from master device 10, smartphone 50 generates and displays warning screen D3 (for example, refer to FIG. 12A) on the basis of the third notification information (step S113). Warning screen D3 indicates details of warning information (Cold Alert) due to the low temperature as text information. The user checks screen D3 and can thus recognize that a low temperature abnormality has occurred in the vicinity of camera 1.

As mentioned above, master device 10 sends abnormality notifications regarding camera 30 in stages to smartphone 50, and thus smartphone 50 can present in stages an abnormality of camera 30 which has occurred in monitoring camera system 5. Therefore, the user checks, for example, a screen of smartphone 50 and can thus easily recognize an apparatus and a location in which an abnormality has occurred, the type of abnormality, and the like.

A case has been exemplified in which the first notification information to third notification information are generated at one time in step S103, but master device 10 may generate the second notification information when the second abnormality notification is sent and may generate the third notification information when the third abnormality notification is sent.

FIG. 10 is a sequence diagram illustrating a second operation example of monitoring camera system 5 in a case where an abnormality has occurred in smart plug 80. It is assumed in FIG. 10 that an overcurrent, that is, a current which is equal to or higher than a predetermined allowable current is detected in smart plug 80. A threshold value of an allowable current is predefined.

First, if a current (overcurrent) which is equal to or higher than a predetermined threshold value is detected by current detection element 855 (step S151), smart plug 80 sends an abnormality notification including the fact that an overcurrent is detected to master device 10 (step S152). The abnormality notification includes, for example, the fact that an abnormality is detected in smart plug 80, a plug ID for identifying smart plug 80 in which the abnormality has occurred, and information on the type of abnormality (for example, overcurrent information).

If the abnormality notification is received from smart plug 80, master device 10 converts the plug ID (mechanical ID) included in the abnormality notification into smart plug identification information which can be identified by the user of smartphone 50. Master device 10 holds in advance smart plug identification information which can be identified by the user, corresponding to a plug ID, as a conversion table (not illustrated). This conversion table is the same as the above-described table (not illustrated) for camera 30. For example, master device 10 converts a plug ID "P12345" into a "plug 1".

Master device 10 generates notification information including the smart plug identification information converted from the plug ID on the basis of the information regarding the abnormality notification (step S153). For example, master device 10 generates fourth notification information including converted smart plug identification information, information indicating that an abnormality of smart plug 80 is detected, and information indicating the type of abnormality (here, overcurrent). As mentioned above, master device 10 processes the information included in the abnormality notification so as to generate the notification information.

Master device 10 sends a fourth abnormality notification including the fourth notification information to smartphone 50 (step S154). In other words, the fourth abnormality notification includes information indicating that the overcurrent abnormality has occurred in smart plug 80.

If the fourth abnormality notification is received from master device 10, smartphone 50 generates and displays warning screen D4 (for example, refer to FIG. 12B) on the basis of the fourth notification information (step S155). Warning screen D4 indicates that the overcurrent abnormality has occurred in smart plug 80 among various apparatuses (for example, camera 30 (Camera), sensor 40 (Sensor), smart plug 80 (Plug), and the telephone (master device 10 or slave device 20) (Phone)) provided in monitoring camera system 5. The user checks screen D4 and can thus recognize that an abnormality has occurred in smart plug 80 among the respective apparatuses of monitoring camera system 5 and a cause of the abnormality is an overcurrent.

As mentioned above, master device 10 sends abnormality notifications regarding smart plug 80 in stages to smartphone 50, and thus smartphone 50 can present in stages an abnormality of smart plug 80 which has occurred in monitoring camera system 5. Therefore, the user checks, for example, a screen of smartphone 50 and can thus easily recognize an apparatus and a location in which an abnormality has occurred, the type of abnormality, and the like.

Also in warning display related to smart plug 80 illustrated in FIG. 12B, in the same manner as in the warning display related to camera 30 illustrated in FIG. 12A, smartphone 50 may display a plurality of warning screens in stages. In the same manner as in the warning display related to camera 30, smartphone 50 may perform display so that it can be recognized that an abnormality has occurred in a specific smart plug 80 among the plurality of smart plugs 80.

FIG. 11 is a sequence diagram illustrating another operation example of monitoring camera system 5 in a case where an abnormality has occurred the camera 30. FIG. 11 illustrates a modification example of the operation example illustrated in FIG. 9. FIG. 11 exemplifies a case where an abnormality notification from master device 10 to smartphone 50 is sent at one time. In FIG. 11, the same operation as in FIG. 9 is given the same step number, and description thereof will be omitted or will be made briefly.

After the processes in steps S101 to S103, master device 10 sends a fifth abnormality notification including the first notification information, the second notification information, and the third notification information to smartphone 50 (step S204).

If the fifth abnormality notification is received from master device 10, smartphone 50 generates and displays warning screen D1 (for example, refer to FIG. 12A) on the basis of the first notification information included in the fifth abnormality notification (step S205). The user checks screen D1 and can thus recognize that an abnormality has occurred in camera 30 among the respective apparatuses of monitoring camera system 5.

If the user checks warning screen D1, and selects (for example, taps), for example, camera icon I1, smartphone 50 receives a selection operation (for example, a tap operation) of camera icon I1 (step S206).

If the selection operation is received, smartphone 50 generates and displays warning screen D2 (for example, refer to FIG. 12B) on the basis of the second notification information included in the fifth abnormality notification (step S207). The user checks warning screen D2 and can thus recognize that an abnormality has occurred in specific camera 1 (for example, a camera installed in the bedroom) among the plurality of cameras 30.

If the user checks warning screen D2, and selects (for example, taps) display area I2 of camera 1 on warning screen D2, smartphone 50 receives a selection operation (for example, a tap operation) of camera 1 (step S208).

If the selection operation is received, smartphone 50 generates and displays warning screen D3 (for example, refer to FIG. 12A) on the basis of the third notification information included in the fifth abnormality notification (step S209). The user checks warning screen D3 and can thus recognize that a low temperature abnormality has occurred in the vicinity of camera 1.

As mentioned above, even in a case where master device 10 sends an abnormality notification to smartphone 50 at one time, smartphone 50 can present in stages an abnormality which has occurred in monitoring camera system 5. Therefore, the user checks, for example, warning a screen of smartphone 50 and can thus easily recognize an apparatus and a location in which an abnormality has occurred, the type of abnormality, and the like. It is possible to reduce the number of times of communication or communication time related to an abnormality notification between master device 10 and smartphone 50 and thus to effectively use communication resources.

As mentioned above, since monitoring camera system 5 notifies in advance smartphone 50 of, for example, the battery shortage or a temperature which is a cause of non-operation of camera 30, a dweller can remove the cause of non-operation of camera 30 in advance. Therefore, monitoring camera system 5 can provide a security system in which camera 30 tends to stably work.

The present invention is not limited to the configuration of the embodiment, and is applicable to any configuration which can realize functions recited in the claims or functions of the configuration of the present embodiment.

For example, in the embodiment, a case has been exemplified in which master device 10 detects abnormalities in a case where a low temperature of camera 30 is detected and an overcurrent is detected in smart plug 80, but abnormalities may be detected in other cases.

For example, in the embodiment, master device 10 may detect an abnormality in a case where a communication link (communication connection) between camera 30 and master device 10 is disconnected. For example, master device 10 transmits and receives a periodic control signal to and from, for example, camera 30, and can recognize that a communication link is disconnected in a case where the control signal from camera 30 is not received during a predetermined period. In a case where this abnormality is detected, master device 10 converts an ID of camera 30 into camera identification information which can be identified by a user of smartphone 50 and generates notification information.

Since master device 10 detects an abnormality due to disconnection of the communication link, for example, even in a case where a suspicious person intentionally disconnects a communication line between camera 30 and master device 10, a monitor can recognize the occurrence of the abnormality on a warning screen. Also in a case where the communication link is unintentionally disconnected due to network defects, a monitor can recognize the occurrence of an abnormality on a warning screen, and can thus rapidly perform a process for recovering the network.

For example, in the embodiment, sensor 40 may detect an abnormality in a case where it is detected that a battery residual quantity of sensor 40 is equal to or smaller than a predetermined residual quantity. In this case, sensor 40 sends an abnormality notification to master device 10. Consequently, battery exchange or the like can be performed before sensor 40 cannot be activated, and thus it is possible to minimize deterioration in monitoring performance of monitoring camera system 5.

As mentioned above, monitoring camera system 5 includes sensor 40, camera 30, smart plug 80, master device 10, and smartphone 50. Camera 30 includes microphone 328, speaker 329, and image capturing unit 312. Master device 10 can perform communication with camera 30, sensor 40, and smart plug 80, and is connected to fixed telephone network 85 so as to perform fixed telephone 800. Smartphone 50, which includes display/operation unit 503, can perform wireless communication with master device 10 by using the wireless router, and is connected to mobile phone 70 via mobile phone network 75. When an abnormality is detected, sensor 40, camera 30, and smart plug 80 transmit an abnormality detection signal indicating that the abnormality is detected to master device 10. In a case where the abnormality detection signal is received, master device 10 converts at least a part of the abnormality detection signal so as to generate notification information, and transmits the notification information to smartphone 50. Smartphone 50 displays a warning screen based on the notification information on display/operation unit 503.

Monitoring camera system 5 is an example of a monitoring system. Camera 30 is an example of a monitoring camera. Smart plug 80 is an example of a power control apparatus. Smartphone 50 is an example of a mobile phone terminal.

Consequently, a dedicated system is not necessary, and monitoring camera system 5 can be built by using existing sensor 40, camera 30, and smartphone 50. Therefore, much labor and cost are not required to introduce monitoring camera system 5. For example, even in a case where any abnormality occurs in monitoring camera system 5, a user of smartphone 50 can rapidly detect the occurrence of the abnormality in cooperation between master device 10 and smartphone 50. Thus, monitoring camera system 5 can stably operate.

In a case where master device 10 receives an abnormality detection signal, monitoring camera system 5 may convert identification information of sensor 40, camera 30, or smart plug 80 in which an abnormality has occurred so as to generate notification information on the basis of the abnormality detection signal.

Consequently, a user of smartphone 50 can easily identify an apparatus in which the abnormality has occurred.

In monitoring camera system 5, smartphone 50 may generate warning screen indicating that an abnormality has occurred on the basis of notification information.

Consequently, it is possible to save time and effort for generating a warning screen in master device 10 and thus to reduce network resources which are required to display the warning screen.

Monitoring camera system 5 may detect an abnormality in a case where camera 30 includes temperature sensor 313a and detects a temperature which is equal to or lower than a predetermined temperature.

Consequently, for example, in a case where camera 30 is installed in an outdoor environment such as a cold district, smartphone 50 can present that a temperature of camera 30 is a low temperature which is equal to or lower than an operable temperature. Therefore, a user of smartphone 50 can take measures regarding an installation location or an installation method of camera 30.

In a case where master device 10 detects disconnection of a communication link with camera 30, monitoring camera system 5 may detect an abnormality, may convert identification information of camera 30 in which the abnormality is detected so as to generate notification information, and may transmit the notification information to smartphone 50.

Consequently, for example, even in a case where a suspicious person intentionally disconnects a communication line between camera 30 and master device 10, a use of smartphone 50 can recognize the occurrence of the abnormality on a warning screen. Also in a case where the communication link is unintentionally disconnected due to network defects, a user of smartphone 50 can recognize the occurrence of an abnormality on a warning screen, and can thus rapidly perform a process for recovering the network.

Monitoring camera system 5 may detect an abnormality in a case where sensor 40 detects that a battery residual quantity of sensor 40 is equal to or smaller than a predetermined residual quantity.

Consequently, a user of smartphone 50 can recognize the occurrence of an abnormality on a warning screen and can thus perform battery exchange or the like before sensor 40 cannot be activated. Therefore, monitoring camera system 5 can minimize deterioration in monitoring performance.

Monitoring camera system 5 may detect an abnormality in a case where smart plug 80 includes current detection element 855 which detects a current flowing through smart plug 80, and detects a current which is equal to or larger than a predetermined current with current detection element 855. Current detection element 855 is an example of a current detection unit.

Consequently, a user of smartphone 50 can recognize the occurrence of an abnormality on a warning screen, and can improve stability during use of an apparatus by rapidly removing a cause of the overcurrent.

Monitoring camera system 5 may display warning screens in stages in a case where smartphone 50 includes display/operation unit 503, and display/operation unit 503 receives a predetermined operation.

Consequently, necessary information regarding various abnormalities can be focused and obtained through a user's operation led by the user of smartphone 50. Information is sequentially displayed from summary information of an abnormality to specific information thereof, and thus it is possible to easily understand abnormality information.

In monitoring camera system 5, a warning screen may include identification information, converted by the master device, of an apparatus in which an abnormality has occurred, or information regarding the type of abnormality.

Consequently, a user of smartphone 50 can easily understand information regarding an abnormality.

In the following, further embodiments of the present invention are indicated:
[Embodiment A]
   A monitoring system comprising:
   a sensor;
   a monitoring camera that includes a microphone, a speaker, and an image capturing unit;
   a power control apparatus that has a call function, and supplies power to each device or stops the power supply;
   a master device that performs calls to the monitoring camera, the sensor, and the power control apparatus, and is connected to a fixed telephone network so as to perform calls to other fixed telephones; and
   a mobile phone terminal that includes a display unit, performs wireless communication with the master device by using a wireless router, and is connected to other mobile phones via a mobile phone network,
   wherein, when an abnormality is detected, the sensor, the monitoring camera, or the power control apparatus transmits an abnormality detection signal indicating that the abnormality is detected to the master device,
   wherein, when the abnormality detection signal is received, the master device converts at least a part of the abnormality detection signal so as to generate notification information, and transmits the notification information to the mobile phone terminal, and
   wherein the mobile phone terminal displays a warning screen based on the notification information on the display unit.
[Embodiment B]
   The monitoring system with the features of embodiment A,
   wherein, when the abnormality detection signal is received, the master device converts identification information of the sensor, the monitoring camera, or the power control apparatus in which the abnormality has occurred, so as to generate the notification information.
[Embodiment C]
   The monitoring system with the features of embodiment A,
   wherein the mobile phone terminal generates a warning screen indicating that the abnormality has occurred on the basis of the notification information.
[Embodiment D]
   The monitoring system with the features of embodiment A,
   wherein the monitoring camera includes a temperature sensor, and detects an abnormality when a temperature which is equal to or lower than a predetermined temperature is detected.
[Embodiment E]
   The monitoring system with the features of embodiment A,
   wherein, when disconnection of a communication link with the monitoring camera is detected, the master device detects an abnormality, converts identification information of a monitoring camera which has detected the abnormality so as to generate the notification information, and transmits the notification information to the mobile phone terminal.
[Embodiment F]
   The monitoring system with the features of embodiment A,
   wherein the sensor detects an abnormality when the sensor detects that a battery residual quantity of the sensor is equal to or smaller than a predetermined residual quantity.
[Embodiment G]
   The monitoring system with the features of embodiment A,
   wherein the power control apparatus includes a current detection unit that detects a current flowing through the power control apparatus, and detects an abnormality when the current detection unit detects a current which is equal to or larger than a predetermined current.
[Embodiment H]
   The monitoring system with the features of embodiment A,
   wherein the mobile phone terminal includes an operation unit, and displays the warning screen in stages when the operation unit receives a predetermined operation.
[Embodiment I]
   The monitoring system with the features of embodiment A,
   wherein the warning screen includes identification information, converted by the master device, of an apparatus in which an abnormality has occurred, or information regarding the type of abnormality.

## Claims

1. A monitoring system comprising:
a unit, the unit being one of a sensor, a monitoring camera that includes an image capturing unit and a power control apparatus that supplies power to an external device or stops the power supply; and
a master device that communicates with said unit by using a digital enhanced cordless telecommunication(DECT) method, that connects to a fixed telephone network so as to perform calls to other fixed telephones, and that connects a slave device by using the DECT method;
wherein when the unit detects an abnormality of the monitoring camera, the unit transmits an abnormality detection signal indicating that the abnormality is detected to the master device,
wherein when the master device receives the abnormality detection signal, the master device generates notification information based on the abnormality detection signal, and the master device transmits the notification information to a mobile phone terminal via a wireless router, the mobile phone terminal connecting to the master device and connecting to other mobile phone terminals via a mobile phone network.

2. The monitoring system of claim 1, wherein the abnormality detected by the unit is one of
- that a detected value is above a predetermined threshold,
- that the detected value is below a predetermined threshold, and
- that a detected state is different from a predetermined state.

3. The monitoring system of any one of claims 1 and 2,
wherein, when the abnormality detection signal is received, the master device converts at least a part of the abnormality detection signal so as to generate the notification information.

4. The monitoring system of any one of claims 1 to 3,
wherein, when the abnormality detection signal is received, the master device converts identification information of the sensor, the monitoring camera, or the power control apparatus in which the abnormality has occurred, so as to generate the notification information.

5. The monitoring system of any one of claims 1 to 4,,
wherein the unit is the monitoring camera which includes a temperature sensor, and detects an abnormality when a temperature which is equal to or lower than a predetermined temperature is detected.

6. The monitoring system of any one of claims 1 to 5,
wherein, when disconnection of a communication link with a monitoring camera included in the monitoring system is detected, the master device detects an abnormality, converts identification information of the monitoring camera the communication link of which is disconnected to generate the notification information, and transmits the notification information to the mobile phone terminal.

7. The monitoring system of any one of claims 1 to 6,
wherein unit is the monitoring camera and, when disconnection of a communication link between the monitoring camera and the master unit is detected, the unit detects an abnormality.

8. The monitoring system of any one of claims 1 to 7,
wherein the unit is the sensor which detects an abnormality when a battery residual quantity of the sensor is equal to or smaller than a predetermined residual quantity.

9. The monitoring system of any one of claims 1 to 8,
wherein the unit is the power control apparatus which includes a current detection unit that detects a current flowing through the power control apparatus, and detects an abnormality when the current detection unit detects a current which is equal to or larger than a predetermined current.

10. A method operating a monitoring system, the monitoring system comprising a unit, the unit being one of a sensor, a monitoring camera that includes an image capturing unit and a power control apparatus that supplies power to an external device or stops the power supply; and a master device that communicates with said unit by using a digital enhanced cordless telecommunication(DECT) method, that connects to a fixed telephone network so as to perform calls to other fixed telephones, and that connects a slave device by using the DECT method; the method comprising:
a step of transmitting, by the unit, of an abnormality detection signal to the master device, when the unit detects an abnormality of the monitoring camera, the abnormality detection signal indicating that the abnormality is detected,
a step of generating, by the master device, of notification information based on the received abnormality detection signal, and
a step of transmitting, by the master device, of the notification information to a mobile phone terminal via a wireless router, the mobile phone terminal connecting to the master device and connecting to other mobile phone terminals via a mobile phone network.
